(19) Europäisches Patentamt
European Patent Office
Office européen des brevets

(11) **EP 0 489 574 B1**

(12) **EUROPEAN PATENT SPECIFICATION**

(45) Date of publication and mention
of the grant of the patent:
**24.01.1996 Bulletin 1996/04**

(51) Int Cl.[6]: **C08F 6/04**

(21) Application number: **91311249.6**

(22) Date of filing: **03.12.1991**

(54) **A process for the supercritical mixed-solvent separation of polymer mixtures**

Verfahren zur Trennung von Polymermischungen mittels überkritischen Lösungsmittelmischungen

Procédé de séparation de melange de polymère en utilisant des melanges de solvants supercritiques

(84) Designated Contracting States:
**BE DE FR GB**

(72) Inventor: **Radosz, Maciej**
**Annandale, New Jersey (US)**

(74) Representative: **Somers, Harold Arnold et al**
**Leatherhead, Surrey KT22 8XE (GB)**

(30) Priority: **06.12.1990 US 623008**

(43) Date of publication of application:
**10.06.1992 Bulletin 1992/24**

(73) Proprietor:
**EXXON RESEARCH AND ENGINEERING COMPANY**
**Florham Park, New Jersey 07932-0390 (US)**

(56) References cited:
• **POLYMER BULLETIN. vol. 12, no. 6, December 1984, HEIDELBERG DE pages 491 - 497; I.YILGÖR: 'SUPERCRITICAL FLUIDS'**

**EP 0 489 574 B1**

**Description**

Polymerization reactions usually lead to products of varying polydispersity, which means that such polymeric products contain a range of components, from low to high molecular weight. The quality of a final polymeric product (polymer for short) to a large extent depends on how broad its molecular weight distribution is. Usually, the broader the distribution, the lower the value. Hence, a common challenge in polymer manufacturing is to make the molecular weight distribution as narrow as possible. Since controlling the polymerization reaction conditions has only a limited effect on the molecular weight distribution, a separation process called fractionation is needed to narrow down the polymer weight distribution by separating either the light and/or heavy fractions from the bulk product, downstream of the polymerization reactor.

The fractionation approaches disclosed in the prior art (see U.S. 3,969,196; U.S. 3,294,772; U.S. 2,457,238; Krukonis, V. POLYMER NEWS, 11, 7-16, 1985; McHugh, M.A. and Krukonis, V.J. SUPERCRITICAL FLUID EXTRACTION: Principles and Practice, Butterworths, 1986, pages 143-180; Kumar, S.K. et al. FLUID PHASE EQUILIBRIA, 29, 373-382, 1986; Kumar, S.K. et al. MACROMOLECULES, 20, 2550-2557, 1987; McHugh, M.A. and Krukonis, V.J. in Encycl. Polym. Sci. Eng. 16, 368-399, 1989) are based on a general concept of using supercritical fluids as solvents.

According to the present invention there is provided a process for fractionating a polydisperse polymer by molecular weight, comprising contacting said polymer with a solvent having at least one antisolvent component and at least one cosolvent component, said components being chosen according to their selectivity and capacity for the polymer fractions at a given fractionation temperature and pressure, said process being operated at a temperature at which at least one of said components is above its critical temperature.

In the present invention, the solvent is a supercritical fluid containing at least two components, antisolvent and cosolvent. The key advantage of this invention is a higher degree of flexibility in selecting separation conditions and, hence, a better extraction efficiency.

The solvent is a homogeneous solution before adding the polymer. Adding the polymer to the solvent converts the solvent solution to a two-phase mixture. One of the phases is polymer rich in polymer fraction of relatively high molecular weight (heavies). The other phase is both rich in solvent and polymer fractions of relatively low molecular weight (lights). That is, the solvent extracts the lights and rejects the heavies. After a period of time the heavies and lights each coalesce separately so that phases disengage. The polymer is separated from each phase by conventional means.

The temperature range is from 10 to 300°C, and the pressure range is from a few tens (e.g. 20) to a few thousand bar (for example up to 3000 bar, but is typically up to a few hundred bar, e.g. 500). Specific choices will depend on the polymer to be separated and solvent components.

The advantage of this process is the flexibility in selecting the operating conditions; not only temperature and pressure but also the solvent composition.

The present invention uses a mixed extraction solvent where at least one component has relatively low capacity (antisolvent) and at least one component has relatively high capacity (cosolvent). This way, in addition to pressure and temperature, the solvent composition can be used to control overall capacities, selectivities and yields. Hence, the present invention has the advantage of enhanced flexibility of fine tuning the operating variables to focus the separation on either the light end, or the heavy end, or the bulk fractions.

In the present invention, the following definitions are used. The solvent capacity is the amount of polymer which can be dissolved in solvent. The capacity is to be high during the extraction step because the higher the capacity the less solvent is needed to extract a given amount of polymer. However, the capacity should be low during the solvent recovery step. The solvent selectivity on the other hand is a measure of how sharp the separation is, and it varies from 1 (no separation) to infinity (perfect separation). For example, if two components are to be separated, the selectivity equal to 1 suggests that the solvent extract has exactly the same composition as the initial feed; the selectivity equal to a very high number suggests that the solvent extract contains only one component and rejects completely the other component. In practice, a selectivity of two to ten may be quite acceptable, a selectivity higher than ten is considered to be very good. In summary, for the extraction step, high capacity coupled with high selectivity is desired.

It is desirable to be able to vary and control capacity and selectivity, for example, to fine tune the separation, to generate reflux, or to recover the extract from solvent by drastically reducing its capacity. In this invention, this can be accomplished by varying the solvent composition because the antisolvent is a low-capacity component while the cosolvent is a high-capacity component.

Examples of antisolvents of the present invention include: Carbon dioxide, $C_1$-$C_3$ alkanes and alkenes, nitrous oxide, sulfur hexafluoride, noble gases (xenon, etc.), halogenated hydrocarbons.

Examples of co-solvents of the present invention include: $C_{3+}$ alkanes, alkenes, cyclics, alcohols, carboxylic acids, esters, ketones, amines, tetrahydrofurane, halogenated hydrocarbons (e.g., carbon tetrachloride, chloroform), formamide, dimethylformamide.

Solvent selection will depend on a temperature region required for a specific polymer. For example, typically, polymers will be fractionated above their glass-transition temperatures but below their thermal-decomposition temperatures. The solvent (mixture of antisolvent and cosolvent) should be selected in such a way that the fractionation temperature

2

be supercritical or near-critical with respect to its critical temperature. This implies that the critical temperatures of mixed solvent candidates must be known approximately. For example, they can be estimated from the critical temperatures of the pure solvent components. The reason that the solvent should be supercritical or near-critical is that its supercritical and near-critical capacities (from zero to high) and selectivities (from one to high) can be easily varied over broad ranges, and hence allow for a great degree of flexibility. This is in contrast to subcritical capacities and selectivities.

A preliminary group of possible solvent candidates, selected based on their critical temperatures and pressures, can be further narrowed down on the basis of their specific capacity/selectivity characteristics, which have to be either measured (conventional techniques) or estimated from established thermodynamic models.

Polymers means mixtures containing compounds having similar chemical composition and structure but differing in molecular weight. Since molecular weight can continuously vary within a characteristic range for specific polymers, we say that polymers are POLYDISPERSE. For the present invention, a polymer is defined as a polydisperse mixture with molecular weight in the range between around 200 to a few hundred thousand gram/mole.

In the preferred embodiment, the present invention includes polymers, solid or liquid, composed of free molecules, that is molecules that are not covalently bonded to each other, and hence free to be solubilized. The criteria will be solubilities in solvents (defined earlier): if the polymer molecules are free to move into the solvent phase, such a polymer is included in the present invention.

Specific examples of polymer classes suitable for the present invention include polyolefins, polydienes, polystyrenes, and random alternating, block and graft copolymers thereof, and mixtures thereof.

Example 1 presents polymeric feed and extract compositions in terms of six arbitrarily chosen pseudo-components having different average molecular weights. This is given for the feed and the extract. The focus of the separation in this case is on removing the light end components (500, 1k, and 2k components having an average MW of approximately 1.6k, in contrast to 18.5k for the bulk polymer). This example shows that the extract, obtained with the yield of 1.3 wt%, is rich in components 500, 1k, 2k, and contains a little of 3k but practically no 8k and 20k. This means that the main result of such a separation process is removal (extraction) of the very light components from the heavy bulk components.

Example 1. Example of Polymer Feed and Extract Compositions in Weight Fractions on a Solvent-Free Basis.

|  | Feed | Extract (1.3 wt%) |
|---|---|---|
| 500 | .0007 | .0380 |
| 1k | .0093 | .4240 |
| 2k | .02 | .4093 |
| 3k | .02 | .1274 |
| 8k | .05 | .0003 |
| 20k | .90 | .0000 |
| $\overline{(MW)_W}$ | 18.5k | 1.6k |

Predicted at 200°C, 200 bar, 15 wt% polymer, 15 wt% $C_2$, 70 wt% $C_6$

polymer = polyolefin

$C_2$ = ethylene (antisolvent)

$C_6$ = 1-hexene (cosolvent)

500 = pseudocomponent having molecular weight of 500

1k = pseudocomponent having molecular weight of 1,000

Similarly, 2k = 2000 ; etc.

Extract yield = 1.3 wt%

$(MW)_W$ = weight average molecular weight

In the next three examples, we will discuss the effects of antisolvent, pressure, and temperature on the solvent capacity and selectivity. In these examples, ethylene is antisolvent and hexene is cosolvent. Example 2 illustrates the antisolvent effect. For five different antisolvent concentrations ($C_2$ Wt% of 10, 15, 20, 30, 85), this example gives the distribution coefficients (K's, the ratios of weight percent in the extract phase to the raffinate phase), capacity, yield, and selectivities along the 2k/3k and 3k/8k lines. We focus on changes in capacity and selectivities; we observe that capacity decreases but selectivities,increase upon increasing the antisolvent concentration. This will allow for a considerable degree of flexibility to control the separation (capacity and selectivity) by varying the antisolvent concentration. It is this effect that provides basis for the present invention.

Example 2. Example of Antisolvent Effect On Separation: Solvent Capacity, Selectivity, and Extract Yield

| $C_2$ Wt% | 10 | 15 | 20 | 30 | 85 |
|---|---|---|---|---|---|
| K(500) | .827 | .791 | .732 | .545 | .16E-1 |
| K(1K) | .449 | .395 | .323 | .158 | .58E-4 |
| K(2k) | .132 | .987E-1 | .627E-1 | .134E-1 | .79E-9 |
| K(3k) | .388E-1 | .246E-1 | .122E-1 | .113E-2 | .1E-13 |
| K(8k) | .855E-4 | .238E-4 | .338E-5 | .483E-8 | .5E-38 |
| K(20k) | .36E-10 | .14E-11 | .98E-14 | .63E-21 | <.1E-50 |
| Capacity Wt% | .29 | .25 | .20 | .10 | <.1E-4 |
| Yield Wt% | 1.5 | 1.3 | 1.0 | .5 | <.1E-2 |
| 2k/3k Selectivity | 3.4 | 4.0 | 5.1 | 11.9 | .8E+5 |
| 3k/8k Selectivity | 454 | 1034 | 3609 | .2E+6 | .2+25 |
| Capacity decreases, selectivity increases with increasing $C_2$ Wt% | | | | | |

Predicted at 200°C, 200 bar, 15 wt% polymer, 85 wt% $C_2+C_6$
Polymer = feed in Example 1
$C_2$ = ethylene (antisolvent)
$C_6$ = 1-hexene (cosolvent)
K(500) = weight distribution coefficient of pseudocomponent having molecular weight of 500
K(1k) = weight distribution coefficient of pseudocomponent having molecular weight of 1k = 1000, Similarly, K(2k) is mol. wt. 2,000 ; etc.
Distribution coefficient = wt% in light phase / wt% in heavy phase
Capacity - solubility of polymer in light phase
Yield - yield of the extracted polymer
2k/3k Selectivity = K(2k)/K(3k), 'relative volatility' of 2k/3k
3k/8k Selectivity = K(3k)/K(8k), 'relative volatility' of 2k/3k

Example 3 illustrates the pressure effect. For five different pressures (100, 200, 250, 300 bar), this example gives the distribution coefficients (K's, the ratios of weight percent in the extract phase to the raffinate phase), capacity, yield, and selectivities along the 2k/3k and 3k/8k lines. We focus on changes in capacity and selectivities; we observe that capacity increases but selectivities decrease upon increasing pressure. This example shows an additional degree of flexibility to control the separation (capacity and selectivity) by varying the process pressure.

Example 3. Example of Pressure Effect

| Pressure Bar | 100 | 200 | 250 | 300 |
|---|---|---|---|---|
| K(500) | .514 | .791 | .836 | .861 |
| K(1k) | .134 | .395 | .465 | .511 |
| K(2k) | .904E-2 | .987E-1 | .144 | .180 |
| K(3k) | .612E-3 | .246E-1 | .445E-1 | .636E-1 |
| K(8k) | .871E-9 | .238E-4 | .126E-3 | .347E-3 |
| K(20k) | .81E-23 | .14E-11 | .97E-10 | .128E-8 |
| Capacity Wt% | .085 | .25 | .30 | .34 |
| Yield Wt% | 0.5 | 1.3 | 1.6 | 1.8 |
| 2k/3k Selectivity | 15 | 4.0 | 3.2 | 2.8 |
| 3k/8k Selectivity | .7E+6 | 1033 | 353 | 183 |
| Capacity increases , selectivity decreases with increasing $C_2$ Wt% | | | | |

Predicted at 200°C, 15 wt% polymer, 15 wt% $C_2$, 70 wt% $C_6$

Polymer = feed in Example 1

$C_2$ = ethylene (antisolvent)

$C_6$ = 1-hexene (cosolvent)

K(500) = weight distribution coefficient of pseudocomponent having molecular weight of 500

K(1k) = weight distribution coefficient of pseudocomponent having molecular weight of 1k = 1000,

Similarly, K (2k) is mol. wt. 2,000 ; etc. Distribution coefficient = wt% in light phase / wt% in heavy phase

Capacity = solubility of polymer in light phase

Yield = yield of the extracted polymer

2k/3k Selectivity = K(2k)/K(3k), 'relative volatility' of 2k/3k

3k/8k Selectivity = K(3k)/K(8k), 'relative volatility' of 2k/3k

Example 4 illustrates the temperature effect. For two different temperatures (200°C and 220°C), at two different pressures, this example gives the distribution coefficients (K's, the ratios of weight percent in the extract phase to the raffinate phase), capacity, yield, and selectivities along the 2k/3k and 3k/8k lines. We focus on changes in capacity and selectivities; we observe that capacity decreases but selectivities increase upon increasing temperature at low pressures (100 and 200 bar). However, the opposite is true at higher pressures (250 and 300 bar); capacity increases but selectivities decrease upon increasing temperature. This example shows that the temperature effect is the most difficult to predict, and will depend on the pressure range for a specific antisolvent/cosolvent pair.

Example 4. Example of Temperature Effect

| Pressure Bar | 100 | 200 | 250 | 300 |
|---|---|---|---|---|
| Temperature °C | 200 | 220 | 200 | 220 |
| K(500) | .514 | .471 | .791 | .834 |
| K(1k) | .134 | .104 | .395 | .431 |
| K(2k) | .904E-2 | .503E-2 | .987E-1 | .115 |
| K(3k) | .612E-3 | .244E-3 | .246E-1 | .308E-1 |
| K(8k) | .871E-9 | .65E-10 | .238E-4 | .422E-4 |
| K(20k) | .81E-23 | .11E-25 | .14E-11 | .56E-11 |
| Capacity Wt% | .085 | .069 | .25 | .27 |
| Yield Wt% | 0.5 | .37 | 1.3 | 1.4 |
| 2k/3k Selectivity | 15 | 21 | 4.0 | 3.7 |
| 3k/8k Selectivity | .7E+6 | .4E+7 | 1033 | 730 |
| Capacity increases with decreasing temperature at low pressures | | | | |
| Capacity decreases with decreasing temperature at high pressures | | | | |

Predicted for 15 wt% polymer, 15 wt% $C_2$, 70 wt% $C_6$

Polymer = feed in Example 1

$C_2$ = ethylene (antisolvent)

$C_6$ = 1-hexene (cosolvent)

K(500) = weight distribution coefficient of pseudocomponent having molecular weight of 500

K(1k) = weight distribution coefficient of pseudocomponent having molecular weight of 1k = 1000,

Similarly, K (2k) is mol. wt. 2,000 ; etc. Distribution coefficient = wt% in light phase / wt% in heavy phase

Capacity = solubility of polymer in light phase

Yield = yield of the extracted polymer

2k/3k Selectivity = K(2k)/K(3k), 'relative volatility' of 2k/3k

3k/8k Selectivity = K(3k)/K(8k), 'relative volatility' of 2k/3k

All these examples are related to a fractionation where the light extract phase is light-end-rich while the heavy phase is bulk-polymer-rich.

The invention will be further illustrated with reference to the accompanying drawings, in which :

Figure 1 shows a separation of increasing capacity mode, to remove the light-end fractions from the bulk polymer.

Figure 2 shows a multiple-vessel separation of decreasing capacity mode, to remove the heavy-end fractions from the bulk polymer.

Figure 3 shows a single-vessel multistage separation, to fractionate the bulk polymer in a continuous process.

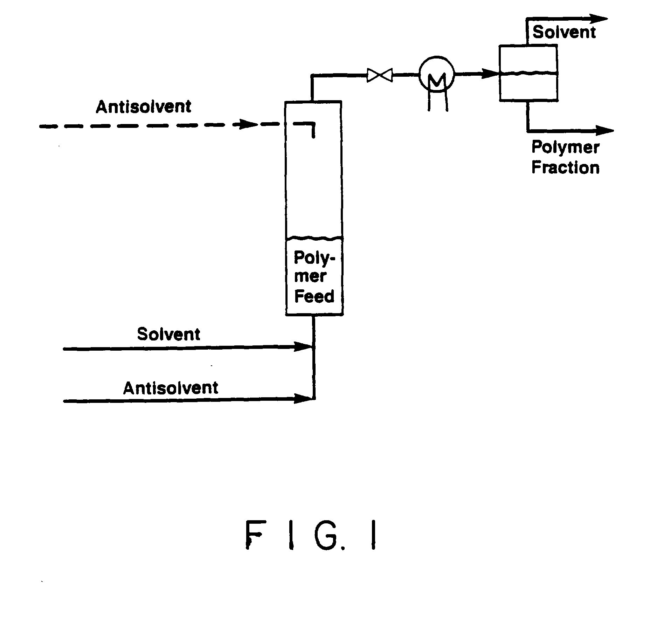

In the embodiment of the present invention shown in Figure 1, the objective is to remove light-end fractions of progressively increasing molecular weight. In this application, a batch of polymer is treated with a solvent of a gradually increasing capacity. This can be accomplished, for example, by gradually increasing pressure, increasing/decreasing temperature, or gradually increasing the cosolvent-to-antisolvent ratio.

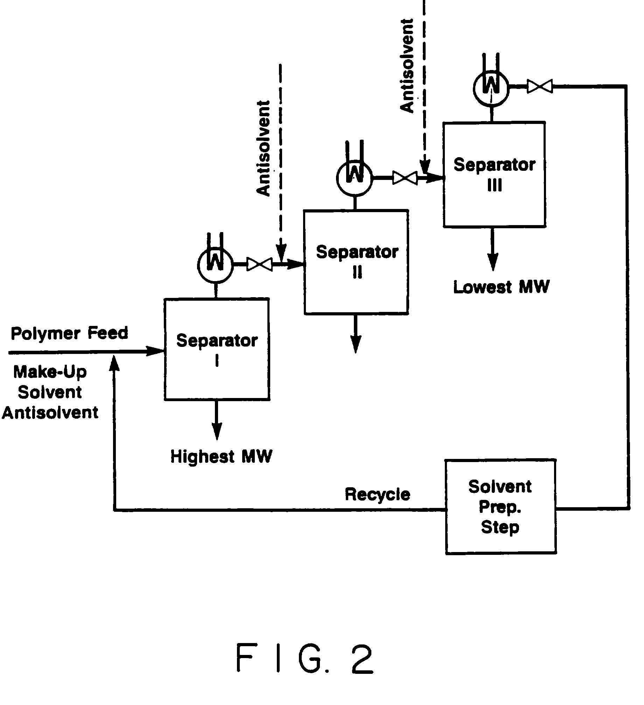

An alternative application, utilizing a decreasing capacity mode, is illustrated with an example shown in Figure 2. Upstream of the separator I, the polymer is mixed with the solvent to form one phase. Next, the solvent capacity is gradually decreased to precipitate fractions of progressively decreasing molecular weight in the successive stages. This can be accomplished, for example, by gradually decreasing pressure, decreasing/increasing temperature, or gradually decreasing the cosolvent-to-antisolvent ratio. This ratio can be varied either within the main solvent stream or, better, by adding the antisolvent at the top of the vessel (e.g., column) to generate reflux. For a single-stage separator, the objective will be to remove the very heavy end from the bulk polymer. For a multistage separation, the light phase in the last stage will become light-end-rich. Usually, this mode of operation requires complete, or almost complete, solubility of the bulk polymer at the maximum capacity conditions upstream of separator I.

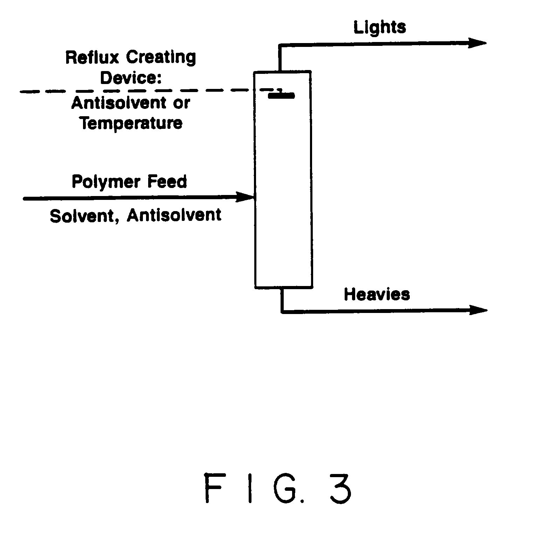

Finally, a single-vessel multistage separation is proposed and illustrated with an example in Figure 3. Here, a desirable concentration gradient along the column is created by a reflux forming device at the top of the column (although reflux can also be formed outside of the column and recycled). Such a device will reduce the solvent capacity by either local addition of antisolvent or local temperature swing (usually decrease). In this example, Figure 3, both solvent and polymer feed flow continuously through the column. The overhead product stream is rich in lights whereas the bottoms product stream is rich in heavies.

In all the application examples solvent can be recovered by conventional means, which usually involve a step reduction of its capacity, for example a combination of temperature and pressure swing that will result in polymer precipitation (phase separation from the solvent), and recycled. Such a recovery of a light component from a heavy component is a conventional chemical engineering operation.

The present invention can have numerous process applications. For example, high-pressure manufactured polyolefins can be fractionated with the mixed solvents composed of monomers and co-monomers. Also, specialty polymeric materials, where low polydispersity is required, can be made this way. Selection of specific solvent components is dependent on their critical points, selectivity and capacity.

The present invention is uniquely suited for fractionating high-molecular weight mixtures, such as, polymers. Compared to molecular distillation, temperatures are quite low and hence thermally sensitive materials can be treated. Compared to liquid solvent fractionation, solvent recovery is more efficient, residual solvent levels are much lower, selectivities with respect to MW are much higher, but selectivities with respect to chemical functionalities can be lower (this can be refined with specifically interacting solvent modifiers). Compared to liquid chromatography, continuous operation and scale-up are possible and operating costs are expected to be much lower.

**Claims**

1. A process for fractionating a polydisperse polymer by molecular weight comprising contacting said polymer with a solvent having at least one antisolvent component and at least one cosolvent component, said components being chosen according to their selectivity and capacity for the polymer fractions at a given fractionation temperature and pressure, said process being operated at a temperature at which at least one of said components is above its critical temperature.

2. The process of claim 1 wherein said temperature is from 10 to 300°C.

3. The process of claim 1 or claim 2 wherein said pressure is from 20 to 3000 bar (2000 to 300,000 kPa).

4. The process of any one of claims 1 to 3 wherein said polymer has a backbone or main-chain acyclic carbon polymer.

5. The process of claim 4 wherein said main-chain or backbone acyclic carbon polymer is selected from the group consisting of polyolefins, polydienes, poly(styrenes), and random alternating, block and graft copolymers thereof, and mixtures thereof.

6. The process of any one of claims 1 to 5 wherein said antisolvent is selected from the group consisting of carbon dioxide, $C_1$-$C_3$ alkanes and alkenes, nitrous oxide, sulfur hexafluoride, noble gases and halogenated hydrocarbons.

**7.** The process of any one of claims 1 to 6 wherein said cosolvent is selected from the group consisting of $C_3+$ alkanes, alkenes, cyclics, alcohols, carboxylic acids, amines, esters, ketones, tetrahydrofurans, halogenated hydrocarbons, formamide, and dimethylformamide.

**Patentansprüche**

**1.** Verfahren zum Fraktionieren eines polydispersen Polymers nach dem Molekulargewicht, bei dem das Polymer mit einem Lösungsmittel mit mindestens einer Antilösungsmittelkomponente und mindestens einer Colösungsmittelkomponente kontaktiert wird, wobei die Komponenten gemäß ihrer Selektivität und Kapazität für die Polymerfraktionen bei einer gegebenen Fraktionierungstemperatur und einem gegebenen Fraktionierungsdruck ausgewählt werden und das Verfahren bei einer Temperatur durchgeführt wird, bei der sich mindestens eine der Komponenten über ihrer kritischen Temperatur befindet.

**2.** Verfahren nach Anspruch 1, bei dem die Temperatur 10 bis 300°C beträgt.

**3.** Verfahren nach Anspruch 1 oder Anspruch 2, bei dem der Druck 20 bis 3000 bar (2000 bis 300 000 kPa) beträgt.

**4.** Verfahren nach einem der Ansprüche 1 bis 3, bei dem das Polymer ein Grundgerüst oder eine Hauptkette aus acyclischem Kohlenstoffpolymer aufweist.

**5.** Verfahren nach Anspruch 4, bei dem das Grundgerüst oder die Hauptkette aus acyclischem Kohlenstoffpolymer ausgewählt ist aus der Gruppe bestehend aus Polyolefinen, Polydienen, Poly(styrolen) und statistischen, alternierenden, Block- oder Pfropfcopolymeren davon und Mischungen daraus.

**6.** Verfahren nach einem der Ansprüche 1 bis 5, bei dem das Antilösungsmittel ausgewählt ist aus der Gruppe bestehend aus Kohlendioxid, $C_1$- bis $C_3$-Alkanen und -Alkenen, Distickstoffoxid, Schwefelhexafluorid, Edelgasen und halogenierten Kohlenwasserstoffen.

**7.** Verfahren nach einem der Ansprüche 1 bis 6, bei dem das Colösungsmittel ausgewählt ist aus der Gruppe bestehend aus $C_{3+}$-Alkanen, Alkenen, cyclischen Verbindungen, Alkoholen, Carbonsäuren, Aminen, Estern, Ketonen, Tetrahydrofuranen, halogenierten Kohlenwasserstoffen, Formamid und Dimethylformamid.

**Revendications**

**1.** Procédé de fractionnement d'un polymère polydispersé par poids moléculaire, comprenant la mise en contact dudit polymère avec un solvant ayant au moins un composant d'antisolvant et au moins un composant de cosolvant, lesdits composants étant sélectionnés en fonction de leur sélectivité et de leur capacité pour les fractions polymères à une température et à une pression de fractionnement données, ledit procédé opérant à une température à laquelle au moins l'un desdits composants se trouve au-dessus de sa température critique.

**2.** Procédé selon la revendication 1, dans lequel ladite température se situe dans une plage de 10 à 300°C.

**3.** Procédé selon la revendication 1 ou 2, dans lequel ladite pression se situe dans une plage de 20 à 3.000 bars (2.000 à 300.000 kPa).

**4.** Procédé selon l'une quelconque des revendications 1 à 3, dans lequel ledit polymère a un polymère de carbone acyclique formant l'ossature ou la chaîne principale.

**5.** Procédé selon la revendication 4, dans lequel ledit polymère de carbone acyclique formant la chaîne principale ou l'ossature est sélectionné dans le groupe formé des polyoléfines, des polydiènes, des poly(styrènes), et de leurs copolymères alternés de manière aléatoire, récurrents et greffés, et de leurs mélanges.

**6.** Procédé selon l'une quelconque des revendications 1 à 5, dans lequel ledit antisolvant est sélectionné dans le groupe formé de l'anhydride carbonique, des alcanes et des alcènes en $C_1$-$C_3$, de l'oxyde nitreux, de l'hexafluorure de soufre, des gaz nobles et des hydrocarbures halogénés.

7. Procédé selon l'une quelconque des revendications 1 à 6, dans lequel ledit cosolvant est sélectionné dans le groupe formé des alcanes en $C_{3+}$, des alcènes, des cycliques, des alcools, des acides carboxyliques, des amines, des esters, des cétones, des tétrahydrofurannes, des hydrocarbures halogénés, du formamide et du diméthylformamide.

# F I G. I

F I G. 2

Reflux Creating
Device:
Antisolvent or
Temperature

Lights

Polymer Feed

Solvent, Antisolvent

Heavies

# F I G. 3